# DEMANDE DE BREVET EUROPEEN

(11) **EP 2 549 411 A2**
(43) Date de publication de la demande: **23.01.2013**
(21) Numéro de dépôt: 12175517.7
(22) Date de dépôt: 09.07.2012
(51) Int. Cl.: G06N 3/063

(54) **Dispositif et procédé de traitement de données**

(30) Priorité: 21.07.2011 FR 1156648
(71) Demandeur: Commissariat à l'Énergie Atomique et aux Énergies Alternatives, 75015 Paris (FR)
(72) Inventeur: Heliot, Rodolphe, 38000 Grenoble (FR); Duranton, Marc, 91400 Orsay (FR); Joubert, Antoine, 38000 Grenoble (FR)
(74) Mandataire: Bonnet, Michel

(57) **Abrégé**

Ce dispositif comporte une pluralité de neurones à décharge (108₁...108_{N}), chacun de ces neurones comprenant : un intégrateur (109₁...109N) conçu pour recevoir des impulsions analogiques successives présentant chacune une certaine valeur, et accumuler les valeurs des impulsions reçues dans une valeur enregistrée, dite valeur d'accumulation, et un déchargeur (114₁...114_{N}) conçu pour émettre une impulsion, appelée impulsion de décharge, en fonction de la valeur d'accumulation, et un support silicium (102, 103, 105) présentant deux faces (104, 106), les neurones (108₁...108_{N}) étant réalisés sur au moins une des deux faces (104, 106), l'intégrateur (109₁...109_{N}) de chaque neurone (108₁...108_{N}) comportant un via métallique de type TSV (110₁...110_{N}) entre les deux faces (104, 106) du support silicium (102, 103, 105), le via métallique de type TSV (110₁...110_{N}) formant une capacité avec le support silicium et présentant un potentiel électrique (V₁...V_{N}) formant la valeur d'accumulation dans laquelle les valeurs des impulsions reçues sont accumulées et en fonction de laquelle l'impulsion de décharge est émise.

## Description

La présente invention concerne un dispositif et un procédé de traitement de données.

L'invention peut par exemple être mise en oeuvre dans un circuit neuromorphique haute densité pour l'émulation de grands réseaux de neurones biologiques, tel que ceux décrits dans les publications suivantes :
- « Wafer-scale integration of analog neural networks », de J. Schemmel, J. Fieres, et K. Meier, IJCNN, 2008, et
- « Dynamically reconfigurable silicon array of spiking neurons with conductance-based synapses », de Vogelstein RJ, Mallik U, Vogelstein JT et Cauwenberghs G., IEEE Transactions on Neural Networks, 2007, 18(1): 253-265.

L'invention peut en outre par exemple être mise en oeuvre dans un circuit neuromorphique haute densité pour des applications de traitement de signal (image, vidéo, son), de classification par apprentissage, de rétine intelligente.

D'autres applications possibles peuvent être trouvées à l'adresse Internet : http://www.faqs.org/ai-faq/neural-nets/part7/section-2.html.

L'invention concerne en particulier des « neurones à décharge ». Ces neurones sont des circuits de traitement élémentaires destinés à être chainés, qui se comportent comme des intégrateurs temporels avec fuite. Leur potentiel interne reflète la somme des différentes entrées positives ou négatives reçues au fil du temps, soumis à une fuite souvent modélisée par un courant de fuite constant. Lorsque le potentiel interne du neurone atteint un certain seuil, le neurone signale cet évènement par un évènement logique et électrique de faible durée (équivalent à un potentiel d'action pour le neurone biologique). Son potentiel interne retourne alors à sa valeur de repos, dans l'attente de futures nouvelles contributions des entrées. Cet évènement logique va à son tour, par l'intermédiaire de sa manifestation électrique, générer une entrée dans les neurones post-synaptiques connectés au neurone d'origine.

Or, un neurone à décharge analogique nécessite un élément capacitif de grande taille (capacité de l'ordre de 500 fF) afin de réaliser l'intégration temporelle des signaux d'entrée pondérés, ce qui consomme beaucoup de surface silicium.

II existe de nombreux exemples d'implémentations sur silicium de neurones « à décharge » analogique, par exemple :
- « Building blocks for electronic spiking neural networks » de A. van Schaik, paru dans Neural networks, 2001, 14(6-7):617-28, disponible à l'adresse : http://www.ncbi.nlm.nih.gov/pubmed/11665758,
- « Real-time simulations of networks of Hodgkin-Huxley neurons using analog circuits » de Zou Q., Bornat Y., Tomas J., Renaud S. et Destexhe A., paru dans Neurocomputing, 2006, 69(10-12):1137-1140, disponible à l'adresse : http://Iinkinghub.elsevier.com/retrieve/pii/SO925231205003875.

Chacune de ces publications décrit ainsi un dispositif de traitement de données, comportant une pluralité d'unités élémentaires de traitement de données, appelées neurones, chacun de ces neurones comprenant : un intégrateur conçu pour recevoir des impulsions analogiques successives présentant chacune une certaine valeur, et accumuler les valeurs des impulsions reçues dans une valeur enregistrée, dite valeur d'accumulation, et un déchargeur conçu pour émettre une impulsion, appelée impulsion de décharge, en fonction de la valeur d'accumulation. En pratique, dans les documents précédents, les neurones sont portés sur une face d'un support.

Dans ces publications, deux grandes options sont traditionnellement disponibles pour réaliser une capacité :
- les capacités de type MIM (de l'anglais « Metal insulator Metal ») où la capacité est créée entre deux niveaux d'interconnexions métalliques
- les capacités de type MOS : la capacité est créée autour d'une grille de transistor

Dans les deux cas, ces éléments demandent une surface de silicium conséquente, dont l'ordre de grandeur est de 1 µm² pour 5 fF. Or, comme indiqué précédemment, les neurones à décharge analogiques requièrent une capacité de l'ordre de 500 fF, ce qui correspond à une surface de silicium de l'ordre de 100 µm², ce qui pose des problèmes d'encombrement en particulier lorsque le nombre de neurones est important.

II peut ainsi être souhaité de prévoir un dispositif de traitement de données qui permette de s'affranchir d'au moins une partie des problèmes et contraintes précités.

L'invention couvre ainsi tout dispositif neuromorphique de traitement de données comportant une pluralité de neurones à décharge, chacun de ces neurones comprenant : un intégrateur conçu pour recevoir des impulsions analogiques successives présentant chacune une certaine valeur, et accumuler les valeurs des impulsions reçues dans une valeur enregistrée, dite valeur d'accumulation, et un déchargeur conçu pour émettre une impulsion, appelée impulsion de décharge, en fonction de la valeur d'accumulation, et un support silicium présentant deux faces, les neurones étant réalisés sur au moins une des deux faces, l'intégrateur de chaque neurone comportant un via métallique de type TSV entre les deux faces du support silicium, le via métallique de type TSV formant une capacité avec le support silicium et présentant un potentiel électrique formant la valeur d'accumulation dans laquelle les valeurs des impulsions reçues sont accumulées et en fonction de laquelle l'impulsion de décharge est émise.

Les TSVs (en anglais : « Through-Silicon Vias ») permettent de connecter entre eux deux circuits intégrés portés par deux plans distincts d'un substrat silicium, généralement les faces supérieure et inférieure du substrat silicium. Les TSVs comportent des vias métalliques percés au travers du substrat silicium du circuit intégré supérieur et connectés sur une métallisation du circuit intégré inférieur. Les termes d' « interconnexion verticale » seront également utilisés par la suite pour désigner un TSV.

Les ordres de grandeur des dimensions d'un TSV sont :
- diamètre entre 5 et 20 µm,
- espacement compris entre 20 et 100 µm, et
- longueur entre 25 et 120 µm.

Par ailleurs, les TSVs présentent une forte capacité parasite avec le substrat, de l'ordre de 500 fF/100 µm de longueur.

La capacité d'un TSV est vue dans les développements actuels comme une nuisance qu'il faut réduire au maximum. En outre, la capacité d'un TSV présente une valeur qui est susceptible d'avoir une grande variabilité.

Néanmoins, grâce à l'invention, cette capacité est mise à profit dans l'intégrateur des neurones pour permettre une architecture en 3D des neurones. Les inventeurs ont en effet trouvé que la variabilité de la valeur de la capacité n'était pas un obstacle dans la mesure où les réseaux de neurones sont tolérants par construction aux variations de conception du matériel, et donc entre autres à la valeur de la capacité d'intégration. De plus, la dispersion des caractéristiques entre neurones peut être compensée par une modification des poids synaptiques, soit explicite, soit de manière automatique lors d'une phase d'apprentissage.

Cette utilisation de TSVs permet de réduire la taille des neurones et de faire de l'intégration dense de circuits analogiques qui demandent des capacités importantes, par exemple pour faire des fonctions d'intégrations.

Grâce à l'invention, il n'est plus nécessaire d'utiliser une capacité MIM ou MOS.

De façon optionnelle, le dispositif neuromorphique de traitement de données comporte en outre un propagateur d'impulsions conçu pour :
- émettre des impulsions analogiques vers au moins un des neurones à partir de données d'entrée, et
- recevoir les impulsions de décharge, et, pour chaque impulsion de décharge reçue, suivant le neurone l'ayant émise : soit émettre des données de sortie du dispositif à partir de l'impulsion de décharge, soit convertir l'impulsion de décharge en au moins une impulsion analogique, appelée impulsion propagée analogique, et émettre chaque impulsion propagée analogique vers un des neurones.

De façon optionnelle également, le propagateur d'impulsions comprend au moins une partie située sur une première des deux faces, appelée face haute, et le déchargeur de chaque neurone est situé sur l'autre des deux faces, appelée face basse, le dispositif de traitement comportant en outre des connexions s'étendant sur la face haute et reliant cette partie du propagateur d'impulsions au via métallique de type TSV de chaque neurone, et des connexions s'étendant sur la face basse et reliant le via métallique de type TSV de chaque neurone au déchargeur de ce neurone.

De façon optionnelle également, le propagateur d'impulsions comporte au moins un via métallique de type TSV prévu pour transmettre des informations depuis la face basse vers la face haute.

De façon optionnelle également, le ou les vias métalliques de type TSV du propagateur d'impulsions ainsi que les vias métalliques de type TSV des neurones sont fabriquées selon un même procédé de fabrication.

De façon optionnelle également, le propagateur d'impulsions comporte en outre :
- un encodeur conçu pour encoder les impulsions de décharge en impulsions de décharge numériques de sorte que chaque impulsion de décharge numérique représente un identifiant du neurone ayant émis l'impulsion de décharge, et
- un bus de données reliant l'encodeur au via métallique de type TSV du propagateur d'impulsions.

De façon optionnelle également, l'intégrateur de chaque neurone est en outre conçu pour diminuer la valeur d'accumulation au cours du temps.

De façon optionnelle également, le déchargeur de chaque neurone est en outre conçu pour réinitialiser la valeur d'accumulation à une certaine valeur à chaque émission d'une impulsion de décharge.

De façon optionnelle également, les impulsions de décharge sont des impulsions de potentiel constant.

De façon optionnelle également, chaque déchargeur comporte un comparateur pour comparer la valeur d'accumulation à une valeur de référence, et un via métallique de type TSV de référence conçue pour compenser les variations de masse que peuvent subir le via métallique de type TSV et le comparateur.

L'invention couvre en outre tout procédé neuromorphique de traitement de données comportant :
- recevoir des impulsions analogiques successives présentant chacune une certaine valeur,
- accumuler les valeurs des impulsions reçues dans une valeur enregistrée, dite valeur d'accumulation, et
- émettre une impulsion, appelée impulsion de décharge, en fonction de la valeur d'accumulation,
les impulsions analogiques successives étant reçues et accumulées dans un via métallique de type TSV entre deux faces d'un support silicium, le via métallique de type TSV formant une capacité avec le support silicium et présentant un potentiel électrique formant la valeur d'accumulation dans laquelle les valeurs des impulsions reçues sont enregistrées et en fonction de laquelle l'impulsion de décharge est émise.

Des exemples de réalisation de l'invention vont à présent être décrits, en se référant aux dessins annexés dans lesquels :
- la figure 1 est une vue simplifiée en trois dimensions d'un dispositif neuromorphique de traitement de données mettant en oeuvre l'invention,
- la figure 2 représente un schéma électrique équivalent d'un neurone du dispositif de traitement de données de la figure 1,
- la figure 3 illustre les étapes successives d'un procédé neuromorphique de traitement de données mettant en oeuvre l'invention réalisée par le dispositif neuromorphique de traitement de données de la figure 1, et
- les figures 4 et 5 sont des vues simplifiées en coupe de variantes d'intégrateur du dispositif neuromorphique de traitement de données de la figure 1.

Le dispositif de traitement de données décrit par la suite est basé sur une solution apparue dans les années 1990 pour permettre de disposer d'un grand nombre d'interconnexions programmables entre des neurones à décharge. Cette solution est par exemple décrite dans :
- « Wiring considerations in analog VLSI systems, with application to field-programmable networks » de M. Sivilotti, Ph.d., California Inst. Technol., Pasadena, CA, 1991,
- « Point-to-point connectivity between neuromorphic chips using address events » de K. Boahen, paru dans IEEE Transactions on Circuits and Systems II: Analog and Digital Signal Processing, 47(5):416-434, May 2000.

Cette solution, appelée en anglais « Adress-Event Representation » (AER), utilise des connexions « virtuelles » plutôt que physiques et a été originellement développée pour des connexions entre deux neurones, pour être plus tard étendue à des connexions entre un neurone et plusieurs neurones. Cette extension est par exemple décrite dans :
- « A burst-mode word-serial address-event link-I-III » de Boahen, K.A., paru dans Circuits and Systems I: Regular Papers, IEEE Transactions on, vol.51, no.7, pp. 1269 - 1300, July 2004, doi: 10.1109/TCS1.2004.830703,
- « Dynamically reconfigurable silicon array of spiking neurons with conductance-based synapses » de Vogelstein R.J., Mallik U., Vogelstein J.T. et Cauwenberghs G., paru dans IEEE Transactions on Neural Networks, 2007, 18(1): 253-265.

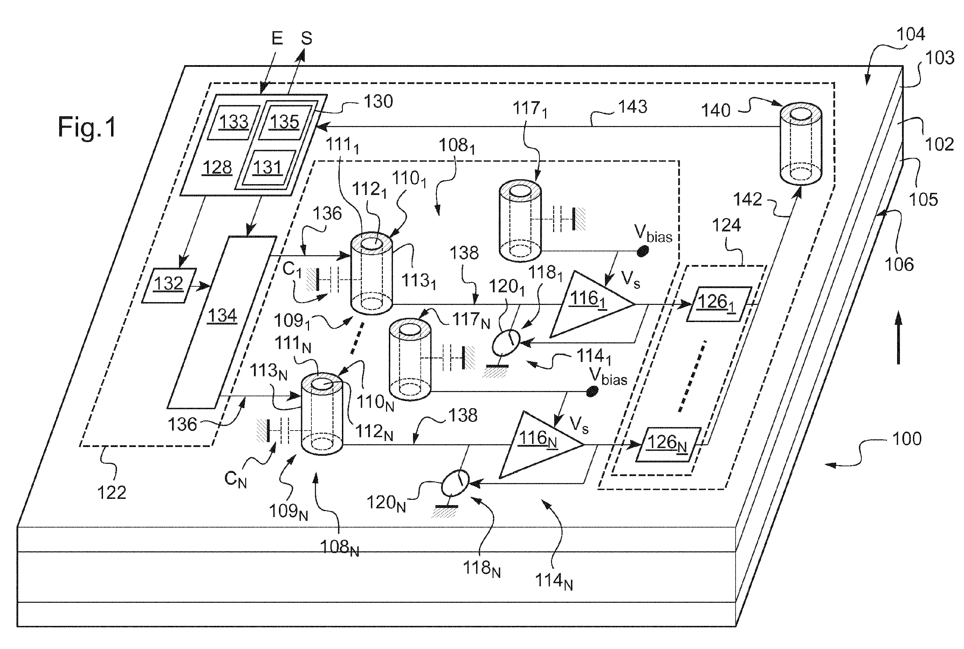

Dans la description qui va suivre, les adjectifs de positionnement des éléments tels que « haut », « bas », « supérieur », « inférieur », etc., feront référence à un axe orienté arbitraire, représenté par une flèche sur les figures 1, 4 et 5.

En référence à la figure 1, un dispositif de traitement de données 100 mettant en oeuvre l'invention comporte tout d'abord un substrat 102 qui est, dans l'exemple décrit, une couche brute de silicium, de l'anglais « Si Bulk », présentant deux côtés opposés, un côté supérieur et un côté inférieur.

Le dispositif de traitement de données 100 comporte en outre une première couche fonctionnalisée de silicium 103 sur le côté supérieur de la couche brute de silicium formant substrat silicium 102. La première couche fonctionnalisée de silicium 103 est appelée par la suite couche haute. La couche haute de silicium 103 présente une face supérieure 104 dirigée à l'opposée de la couche brute de silicium formant substrat silicium 102, cette face étant appelée par la suite face haute 104. Dans l'exemple décrit, les couches 102 et 103 sont formées dans une même couche globale de silicium.

Le dispositif de traitement de données 100 comporte en outre une seconde couche fonctionnalisée de silicium 105 sur le côté inférieur de la couche brute de silicium formant substrat silicium 102. La seconde couche fonctionnalisée de silicium 105 est appelée par la suite couche basse. La couche basse de silicium 105 présente une face supérieure 106 dirigée vers la couche brute de silicium formant substrat silicium 102, cette face étant appelée par la suite face basse 106. Dans l'exemple décrit, la couche 105 est distincte de la couche globale de silicium formant les couches 102 et 103, et rapportée sur cette couche globale.

On remarquera que les faces 104, 106 sont parallèles l'une à l'autre.

Le dispositif de traitement de données 100 comporte ensuite une pluralité d'unités élémentaires de traitement de données, appelées neurones 108₁...108_{N}.

Le substrat silicium 102 et les parties des couches de silicium 103, 105, ne formant pas de composants électriques, en particuliers ceux qui seront décrits par la suite, forment ainsi un support silicium présentant les deux faces 104, 106 par lesquelles les neurones 108₁...108_{N} sont portés, c'est-à-dire sur au moins une desquelles les neurones sont réalisés, comme cela sera décrit par la suite.

Chacun des neurones 108₁...108_{N} comprend tout d'abord un intégrateur 109₁...109_{N} à base d'interconnexion verticale (c'est-à-dire de TSV). Dans le dispositif de traitement de données 100 décrit, l'intégrateur 109₁...109_{N} comporte une seule interconnexion verticale, appelée interconnexion verticale d'accumulation 110₁...110_{N}, entre les deux faces 104, 106.

Plus précisément, chaque interconnexion verticale d'accumulation 110₁...110_{N} comporte un matériau conducteur 112₁...112_{N} (le via métallique) disposé dans une perforation 113₁...113_{N} traversant de part en part le substrat silicium 102, et dont les parois sont recouvertes d'un matériau isolant 111₁...111_{N}. Chaque interconnexion verticale d'accumulation 110₁...110_{N} présente ainsi une extrémité sur la face haute 104, appelée extrémité supérieure, et une extrémité sur la face basse 106, appelée extrémité inférieure. Chaque interconnexion verticale d'accumulation 110₁...110_{N} est conçue pour recevoir, à son extrémité supérieure, des impulsions analogiques successives de potentiel électrique. Le matériau conducteur 112₁...112_{N} présente une capacité C₁...C_{N} non nulle avec la masse électrique, formée dans le cas présent du substrat silicium 102. Cette capacité C₁...C_{N} est représentée en pointillés sur la figure 1. Ainsi, le matériau conducteur 112₁...112_{N} présente une tension V₁...V_{N} qui augmente avec chaque impulsion reçue, de sorte que l'interconnexion verticale d'accumulation 110₁...110_{N} est conçue pour accumuler les valeurs des impulsions reçues dans une valeur enregistrée, dite valeur d'accumulation, à savoir la tension V₁...V_{N}. En outre, du fait de la présence d'un courant de fuite entre le matériau conducteur 112₁...112_{N} et la masse électrique, la tension V₁...V_{N} diminue au cours du temps, de sorte que l'interconnexion verticale d'accumulation 110₁...110_{N} est conçue pour diminuer la valeur d'accumulation au cours du temps.

Chacun des neurones 108₁...108_{N} comprend ensuite un circuit électronique, appelé déchargeur 114₁...114_{N}, pour l'émission d'impulsions par le neurone 108₁...108_{N}.

Chaque déchargeur 114₁...114_{N} comporte tout d'abord un comparateur 116₁...116_{N} conçu pour émettre une impulsion, appelée impulsion de décharge, en fonction de la valeur d'accumulation. Plus précisément, chaque comparateur 116₁...116_{N} est tout d'abord conçu pour comparer la valeur d'accumulation à un seuil prédéterminé (une tension V_{S} dans le cas décrit), identique pour tous les neurones. À cet effet, la tension V_{S} est fournie à chaque comparateur 116₁...116_{N}. Chaque comparateur 116₁...116_{N} est ensuite conçu pour émettre une impulsion de décharge sous la forme d'une impulsion de potentiel électrique constant lorsque la valeur d'accumulation dépasse le seuil prédéterminé.

À cause de bruit électrique dans le substrat silicium 102, il est possible que le potentiel électrique de la masse électrique au niveau de l'interconnexion verticale d'accumulation 110₁...110_{N} varie par rapport au potentiel de la masse électrique utilisée par des moyens (non représentés) utilisés pour générer la tension V_{S}, ce qui risquerait de fausser la comparaison avec la tension V_{S}. Afin de minimiser l'influence du bruit électrique du substrat silicium 102, chaque déchargeur 114₁...114_{N} comporte en outre une interconnexion verticale de référence 117₁...117_{N}. L'interconnexion verticale de référence 117₁...117_{N} est polarisée à un potentiel V_{bias} fourni par les moyens mentionnés précédemment, et fournit le potentiel Vₛ au comparateur. L'interconnexion verticale de référence 117₁...117_{N} est située à proximité de l'interconnexion verticale d'accumulation 110₁...110_{N} du neurone 108₁...108_{N} considéré, de préférence à moins de 100 micromètres de l'interconnexion verticale d'accumulation 110₁...110_{N} du neurone 108₁...108_{N} considéré. Ainsi, l'interconnexion de référence 117₁...117_{N} compense les variations de masse que peuvent subir l'interconnexion verticale d'accumulation 110₁...110_{N} et le comparateur 116₁...116_{N}.

Chaque déchargeur 114₁...114_{N} comporte ensuite un circuit électronique d'initialisation 118₁...118_{N}, conçu pour réinitialiser la valeur d'accumulation à une certaine valeur, à chaque émission d'une impulsion de décharge. Dans le dispositif décrit, chaque circuit électronique d'initialisation 118₁...118_{N} comporte un interrupteur 120₁...120_{N} reliant le matériau conducteur 112₁...112_{N} à la masse électrique, l'interrupteur 120₁...120_{N} étant commandé dans sa position fermée par l'impulsion de décharge, de manière à initialiser la tension V₁...V_{N} au potentiel nul (potentiel de la masse électrique) à chaque émission d'une impulsion de décharge.

Les déchargeurs 114₁...114_{N} sont portés par la face basse 106.

Le dispositif de traitement de données 100 comporte ensuite un autre circuit électronique, appelé propagateur d'impulsions 122, pour gérer les impulsions à destination ou provenant des neurones 108₁...108_{N}.

Le propagateur d'impulsions 122 comporte tout d'abord un circuit électronique, appelé encodeur 124, conçu pour encoder les impulsions de décharge émises par les neurones 108₁...108_{N} en impulsions de décharge numériques de sorte que chaque impulsion numérique comprenne une suite de valeurs binaires représentant un identifiant (appelé par la suite « adresse ») du neurone 108₁...108_{N} ayant émis l'impulsion de décharge (appelé par la suite « neurone de provenance »). Dans le dispositif décrit, l'encodeur 124 comporte un encodeur élémentaire 126₁...126_{N} pour chaque neurone 108₁...108_{N}. Les encodeurs élémentaires 126₁...126_{N} sont portés par la face basse 106.

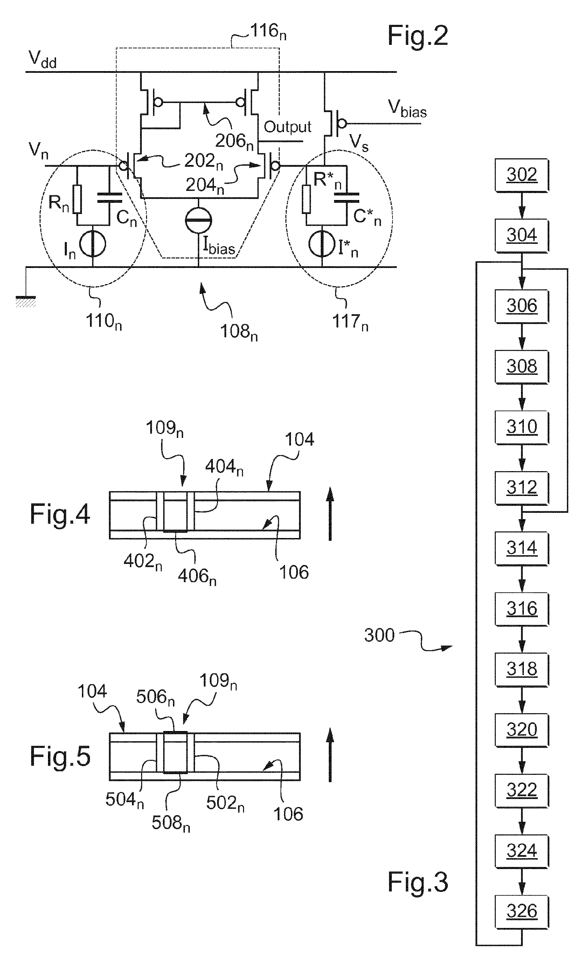

Le propagateur d'impulsions 122 comporte en outre un contrôleur 128 pour générer et émettre des impulsions numériques, appelées impulsions propagées numériques, chacune destinée à être transmise à l'un respectif des neurones, appelé neurone de destination. Dans le dispositif décrit, le contrôleur 128 comporte une mémoire 130 dans laquelle sont enregistrées des instructions de programme d'ordinateur 131, et une unité centrale de traitement 133 conçue pour exécuter les instructions de programme d'ordinateur 131 afin de réaliser les fonctions décrites ci-après, ainsi que les étapes décrites par la suite, en référence à la figure 3. Ainsi, le contrôleur 128 est tout d'abord conçu pour générer au moins une impulsion propagée numérique à partir de données d'entrée E. Le contrôleur 128 est en outre conçu pour recevoir les impulsions de décharge numériques provenant des neurones 108₁...108_{N} et pour déterminer, pour chacune d'elles, le neurone de provenance à partir de l'adresse indiquée dans l'impulsion de décharge numérique. En outre, pour chaque impulsion de décharge numérique, le contrôleur 128 est en outre conçu pour, suivant le neurone de provenance, soit émettre des données S de sortie du dispositif à partir de l'impulsion de décharge, soit convertir l'impulsion de décharge numérique en au moins une impulsion propagée numérique. Pour déterminer le ou les neurones de destination de l'impulsion propagée numérique, une table de correspondance 135, aussi appelée « Look-Up Table » ou LUT en anglais, est enregistrée dans la mémoire 130. Cette table de correspondance 135 définit, suivant l'adresse du neurone de provenance, l'adresse du ou des neurones de destination. La table de correspondance 135 définit en outre les valeurs des impulsions propagées (également appelées « poids » dans le domaine des réseaux de neurones).

Les poids sont généralement déterminés par calcul ou bien au cours d'une phase d'apprentissage, au cours de laquelle des données d'entrée, associées à des données de sortie connues, sont fournies au dispositif de traitement 100, les poids étant alors déterminés afin que le dispositif de traitement 100 fournisse les données de sortie connues.

Le contrôleur 128 est porté par la face haute 104.

Le propagateur d'impulsions 122 comporte en outre un convertisseur numérique analogique 132 pour convertir chaque impulsion propagée numérique émise par le contrôleur 128 en impulsion propagée analogique présentant comme amplitude la valeur déterminée à l'aide de la table de correspondance 135, ainsi qu'un commutateur 134 commandé par le contrôleur 128 pour diriger l'impulsion propagée analogique vers le ou les neurones de destination correspondant. Le convertisseur numérique analogique 132 et le commutateur 134 sont portés par la face haute 104.

Le dispositif de traitement 100 comporte en outre des connexions 136 s'étendant sur la face haute 104 et reliant le commutateur 134 à l'extrémité supérieure de l'interconnexion verticale d'accumulation 110₁...110_{N} de chaque neurone 108₁...108_{N}.

Comme le propagateur d'impulsions 122 comprend une partie située sur la face haute 104 (à savoir le contrôleur 128, le convertisseur numérique analogique 132 et le commutateur 134), tandis que le déchargeur 114₁...114_{N} de chaque neurone 108₁...108_{N} est situé sur la face basse 106, il est nécessaire de permettre une communication des données représentant les impulsions de décharge depuis la face basse 106 vers la face haute 104. A cet effet, le propagateur d'impulsions 122 comporte au moins une interconnexion verticale 140 prévue pour transmettre ces données représentant les impulsions de décharge depuis la face basse 106 vers la face haute 104. En outre, le propagateur d'impulsions 122 comporte un bus de données 142 reliant les encodeurs élémentaires 126₁...126_{N} à l'extrémité inférieure (celle du côté de la face basse 106) de l'interconnexion verticale 140 du propagateur d'impulsions 122. Le bus de données 142 s'étend sur la face basse 106 du substrat silicium 102. En outre, le propagateur d'impulsions 122 comporte une connexion 143 reliant l'extrémité supérieure (celle du côté de la face haute 104) de l'interconnexion verticale 140 du propagateur d'impulsions 122 au contrôleur 128.

Par ailleurs, de préférence, la ou les interconnexions verticales 140 du propagateur d'impulsions 122, les interconnexions verticales d'accumulation 110₁...110_{N} et les interconnexions verticales de référence 117₁...117_{N} des neurones 108₁...108_{N} sont fabriquées selon un même procédé de fabrication, et sont donc identiques. Cela simplifie grandement la fabrication du dispositif de traitement de données 100. De préférence, le procédé décrit dans la publication : "Development and characterisation of high electrical performances TSV for 3D applications", de Henry D., Cheramy S., Charbonnier J., Chausse P., Neyret M., Garnier G., Brunet-Manquat C., Verrun S., Sillon N., Bonnot L., Farcy A., Cadix L., Rousseau M. et Saugier E., dans : « Electronics Packaging Technology Conference, 2009. EPTC '09 », 11 th vol., pp.528-535, 9-11 Dec. 2009 doi: 10.1109/EPTC.2009.5416490.

Ce procédé comporte en résumé une étape de gravure profonde du substrat silicium, une étape de dépôt d'un matériau isolant et une étape de dépôt d'un matériau conducteur, par exemple en métal.

De préférence, le procédé de fabrication permet d'obtenir une valeur de capacité prédéfinie avec une incertitude de 10% ou plus. Ceci permet d'utiliser un procédé de fabrication simple, et donc peu onéreux. Généralement, une telle incertitude ne serait pas tolérée pour un circuit électronique analogique. Cependant, comme expliqué précédemment, la structure même d'un réseau de neurones permet de s'en accommoder.

En référence à la figure 2 qui représente un exemple de schéma électrique équivalent, un des neurones 108₁...108_{N} est représenté et porte la référence 108ₙ, l'indice n étant compris entre 1 et N. Les éléments de ce neurone 108ₙ portent également l'indice « n ».

L'interconnexion verticale d'accumulation 110ₙ du neurone 108ₙ est modélisée par une résistance Rₙ et la capacité Cₙ en parallèle, une première borne de ces deux éléments présentant la tension Vₙ et l'autre borne de ces deux éléments étant reliée à la masse électrique par une source de courant Iₙ.

Le comparateur 116ₙ du neurone 108ₙ comporte tout d'abord un transistor à effet de champ d'entrée 202ₙ dont la grille est reliée à l'interconnexion verticale d'accumulation 110ₙ pour recevoir la tension Vₙ.

Le comparateur 116ₙ comporte en outre un transistor à effet de champ de sortie 204ₙ dont la grille est reliée à l'interconnexion verticale de référence 117ₙ pour recevoir la tension V_{S}.

Le comparateur 116ₙ comporte en outre un montage « miroir de courant » 206ₙ à base de transistors à effet de champ (connu en soi) alimenté par une tension V_{dd} et connecté à l'un parmi la source et le drain des transistors à effet de champ d'entrée et de sortie 202ₙ, 204ₙ.

Le comparateur 116ₙ comporte en outre une source de courant I_{bias} reliant à la masse électrique l'autre parmi la source et le drain des transistors à effet de champ d'entrée et de sortie 202ₙ, 204ₙ.

L'interconnexion verticale de référence 117ₙ est modélisée par une résistance R*ₙ et une capacité C*ₙ en parallèle, une première borne de ces deux éléments recevant la tension V_{S} et l'autre borne de ces deux éléments étant reliée à la masse électrique par une source de courant I*n.

Les autres neurones sont identiques au neurone 108ₙ.

En référence à la figure 3, un procédé 300 de traitement de données mis en oeuvre par le dispositif de la figure 1 comporte les étapes suivantes.

Au cours d'une étape 302, le contrôleur 128 reçoit des données d'entrée.

Au cours d'une étape 304, le contrôleur 128 détermine au moins un neurone de destination et la valeur de la ou des impulsions propagées numériques à émettre à destination de ce ou ces neurones.

Pour chaque impulsion propagée numérique déterminée, les étapes suivantes 306 à 312 sont réalisées.

Au cours d'une étape 306, le contrôleur 128 émet l'impulsion propagée numérique au convertisseur numérique analogique 132.

Au cours d'une étape 308, le contrôleur 128 convertit l'impulsion propagée numérique en impulsion propagée analogique et l'émet vers le commutateur 134.

Au cours d'une étape 310, le contrôleur 128 commande le commutateur 134 afin de configurer ce dernier pour émettre l'impulsion propagée analogique vers le neurone de destination correspondant.

Au cours d'une étape 312, le commutateur 134 émet l'impulsion propagée analogique vers le neurone de destination correspondant.

Au cours d'une étape 314, la ou les impulsions propagées sont accumulées dans l'intégrateur 109₁...109_{N} des neurones de destination.

Au cours d'une étape 316, le déchargeur 114₁...114_{N} d'un ou plusieurs neurones détermine que la valeur accumulée dépasse la valeur de seuil.

En conséquence, le déchargeur émet, au cours d'une étape 318, une impulsion de décharge de potentiel constant et, au cours d'une étape 320, réinitialise la valeur accumulée.

Au cours d'une étape 322, l'encodeur 124 convertit les impulsions de décharge de potentiel constant en impulsions de décharge numériques incluant l'adresse du neurone de provenance.

Au cours d'une étape 324, les impulsions de décharge numériques sont convoyées par le bus de données 142 et l'interconnexion verticale 140 jusqu'au contrôleur 128.

Au cours d'une étape 326, le contrôleur 128 convertit, en fonction de leur adresse de provenance, les impulsions de décharge numériques soit en données S de sortie du dispositif soit en impulsions propagées. Dans ce dernier cas, le contrôleur détermine la valeur des impulsions propagées et les neurones de destination à partir de la table de correspondance 135. La valeur des impulsions est obtenue à partir du poids indiqué dans la table de correspondance 135.

Le procédé retourne alors aux étapes 306 à 312.

En référence à la figure 4, chaque intégrateur 109ₙ (avec l'indice n variant entre 1 et N) comporte en variante deux interconnexions verticales d'accumulation 402ₙ, 404ₙ montées en série, c'est-à-dire que leur extrémités inférieures sont reliées par une métallisation 406ₙ sur la face inférieure du substrat silicium, tandis que les impulsions sont reçues par l'extrémité supérieure de la première interconnexion verticale d'accumulation 402ₙ et que l'extrémité supérieure de l'autre interconnexion verticale d'accumulation 404ₙ est reliée au déchargeur pour lui fournir la tension Vₙ. Cette solution permet de conserver les deux parties constitutives du circuit de neurone sur le même circuit intégré (la même face du substrat silicium). Dans ce cas, une architecture 3D, c'est-à-dire sur au moins deux faces du support silicium, n'est pas nécessaire. Les interconnexions verticales d'accumulation 402ₙ, 404ₙ ne sont ainsi utilisées que pour leur effet capacitif, et non pour passer d'une face du substrat silicium à l'autre.

En référence à la figure 5, chaque intégrateur 109ₙ (avec l'indice n variant entre 1 et N) comporte en variante deux interconnexions verticales d'accumulation 502ₙ, 504ₙ montées en parallèle, c'est-à-dire que leurs extrémités supérieures et inférieures sont connectées ensemble par des métallisations 506ₙ, 508ₙ. Cette solution permet d'avoir une capacité plus importante, et donc d'avoir des capacités d'intégration avec une constante de temps plus élevée.

II apparaît clairement qu'un dispositif de traitement de données et un procédé de traitement de données tels que ceux décrits précédemment permettent de réduire l'encombrement du dispositif de traitement de données.

L'invention n'est pas limitée au mode de réalisation décrit précédemment et il apparaîtra à l'homme de l'art que diverses modifications peuvent y être apportées, à la lumière de l'enseignement qui vient de lui être divulgué.

En particulier, les neurones pourraient être répartis entre la face haute et la face basse (voire sur plus de deux plans).

Dans ce cas, une interconnexion verticale similaire à l'interconnexion verticale 140 peut être prévue pour convoyer les impulsions propagées analogiques émises par le propagateur d'impulsion jusqu'à la face inférieure, où elles sont reçues par les interconnexions verticales d'accumulation des neurones portés par la face supérieure.

En outre, les neurones pourraient être connectés directement entre eux sans passer par la solution AER décrite précédemment.

En outre, le contrôleur 128 pourrait être remplacé par une matrice de connexion, appelée « crossbar » en anglais, qui ne comprend pas d'unité de traitement exécutant un programme d'ordinateur.

Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Dispositif neuromorphique de traitement de données, comportant :
- une pluralité de neurones à décharge (108₁...108_{N}), chacun de ces neurones comprenant :
+ un intégrateur (109₁...109_{N}) conçu pour :
* recevoir des impulsions analogiques successives présentant chacune une certaine valeur, et
* accumuler les valeurs des impulsions reçues dans une valeur enregistrée, dite valeur d'accumulation, et
+ un déchargeur (114₁...114_{N}) conçu pour :
* émettre une impulsion, appelée impulsion de décharge, en fonction de la valeur d'accumulation, et
- un support silicium (102, 103, 105) présentant deux faces (104, 106), les neurones (108₁...1 08_{N}) étant réalisés sur au moins une des deux faces (104, 106),
**caractérisé en ce que** l'intégrateur (109₁...109_{N}) de chaque neurone (108₁...1 08_{N}) comporte un via métallique de type TSV (110₁...110_{N}) entre les deux faces (104, 106) du support silicium, le via métallique de type TSV (110₁...110_{N}) formant une capacité avec le support silicium et présentant un potentiel électrique (V₁...V_{N}) formant la valeur d'accumulation dans laquelle les valeurs des impulsions reçues sont accumulées et en fonction de laquelle l'impulsion de décharge est émise.

2. Dispositif neuromorphique de traitement de données selon la revendication 1, comportant en outre un propagateur d'impulsions (122) conçu pour :
- émettre des impulsions analogiques vers au moins un des neurones (108₁...108_{N}) à partir de données d'entrée (E), et
- recevoir les impulsions de décharge, et, pour chaque impulsion de décharge reçue, suivant le neurone (108₁...1 08_{N}) l'ayant émise :
+ soit émettre des données de sortie (S) à partir de l'impulsion de décharge,
+ soit convertir l'impulsion de décharge en au moins une impulsion analogique, appelée impulsion propagée analogique, et émettre chaque impulsion propagée analogique vers un des neurones (108₁...108_{N}).

3. Dispositif neuromorphique de traitement de données selon la revendication 2, dans lequel le propagateur d'impulsions (122) comprend au moins une partie (128, 132, 134) située sur une première des deux faces, appelée face haute (104), et dans lequel le déchargeur (114₁...114_{N}) de chaque neurone (108₁...108_{N}) est situé sur l'autre des deux faces, appelée face basse (106), le dispositif de traitement comportant en outre des connexions (136) s'étendant sur la face haute (104) et reliant cette partie (128, 132, 134) du propagateur d'impulsions (122) au via métallique de type TSV (110₁...110_{N}) de chaque neurone (108₁...108_{N}), et des connexions (138) s'étendant sur la face basse (106) et reliant le via métallique de type TSV (110₁...110_{N}) de chaque neurone (108₁...108_{N}) au déchargeur (114₁...114_{N}) de ce neurone (108₁...108_{N}).

4. Dispositif neuromorphique de traitement de données selon la revendication 2 ou 3, dans lequel le propagateur d'impulsions (122) comporte au moins un via métallique de type TSV (140) prévu pour transmettre des informations depuis la face basse (106) vers la face haute (104).

5. Dispositif neuromorphique de traitement de données selon la revendication 4, dans lequel le ou les vias métalliques de type TSV (140) du propagateur d'impulsions (122) ainsi que les vias métalliques de type TSV (110₁...110_{N}) des neurones sont fabriquées selon un même procédé de fabrication.

6. Dispositif neuromorphique de traitement de données selon la revendication 4 ou 5, dans lequel le propagateur d'impulsions (122) comporte en outre :
- un encodeur (124) conçu pour encoder les impulsions de décharge en impulsions de décharge numériques de sorte que chaque impulsion de décharge numérique représente un identifiant du neurone ayant émis l'impulsion de décharge (108₁...108_{N}), et
- un bus de données (142) reliant l'encodeur (124) au via métallique de type TSV (140) du propagateur d'impulsions (122).

7. Dispositif neuromorphique de traitement de données selon l'une quelconque des revendications 1 à 6, dans lequel l'intégrateur (109₁...109_{N}) de chaque neurone (108₁...108_{N}) est en outre conçu pour diminuer la valeur d'accumulation au cours du temps.

8. Dispositif neuromorphique de traitement de données selon l'une quelconque des revendications 1 à 7, dans lequel le déchargeur (114₁...114_{N}) de chaque neurone (108₁...108_{N}) est en outre conçu pour réinitialiser la valeur d'accumulation à une certaine valeur à chaque émission d'une impulsion de décharge.

9. Dispositif neuromorphique de traitement de données selon l'une quelconque des revendications 1 à 8, dans lequel les impulsions de décharge sont des impulsions de potentiel constant.

10. Dispositif neuromorphique de traitement de données selon l'une quelconque des revendications 1 à 9, dans lequel chaque déchargeur (114₁...114_{N}) comporte un comparateur (116₁...116_{N}) pour comparer la valeur d'accumulation à une valeur de référence, et un via métallique de type TSV de référence (117₁...117_{N}) conçue pour compenser les variations de masse que peuvent subir le via métallique de type TSV (110₁...110_{N}) et le comparateur (116₁...116_{N}).

11. Procédé neuromorphique de traitement de données, comportant :
- recevoir des impulsions analogiques successives présentant chacune une certaine valeur,
- accumuler les valeurs des impulsions reçues dans une valeur enregistrée, dite valeur d'accumulation, et
- émettre une impulsion, appelée impulsion de décharge, en fonction de la valeur d'accumulation,
**caractérisé en ce que** les impulsions analogiques successives sont reçues et accumulées dans un via métallique de type TSV entre deux faces d'un support silicium, le via métallique de type TSV formant une capacité avec le support silicium et présentant un potentiel électrique formant la valeur d'accumulation dans laquelle les valeurs des impulsions reçues sont enregistrées et en fonction de laquelle l'impulsion de décharge est émise.
